# EUROPEAN PATENT APPLICATION

(11) **EP 4 609 710 A1**
(43) Date of publication of application: **03.09.2025**
(21) Application number: 25157996.7
(22) Date of filing: 14.02.2025
(51) Int. Cl.: A01K 69/06

(54) **A GATEWAY FOR USE IN A SCALLOP TRAP AND A METHOD OF RETAINING SCALLOPS**

(30) Priority: 28.02.2024 GB 202402842
(71) Applicant: Fishtek Marine Ltd, Totnes, Devon TQ9 6JY (GB)
(72) Inventor: Kibel, Ben, Totnes, TQ9 6JY (GB); Kibel, Pete, Totnes, TQ9 6JY (GB); Enever, Robert, Totnes, TQ9 6JY (GB)
(74) Representative: Handsome I.P. Ltd

(57) **Abstract**

The present invention provides a gateway in which each of a plurality of independently-movable arms 17 are pivotable about a hinge 11 between a closed position in which it extends across a passageway 1, and a deflected position in which it is spaced from the lower periphery 3 of the passageway 1. In this way, a scallop need only push the number of arms 17 necessary to pass through the gateway.

## Description

The present invention relates generally to a gateway for use in a scallop trap and a method of retaining scallops within a scallop trap.

Crab and lobster pots/traps/creels have been used for over a hundred years, and generally comprise a chamber formed from a frame that supports a mesh wall. An opening in the mesh wall allows crabs and/or lobsters to the enter the chamber. Bait may be placed within the camber to encourage the entry of such crabs or lobsters.

The opening may be configured in various different manners to be one-way; that is to substantially inhibit the escape of such crabs or lobsters once within the chamber. For example, such openings may be funnel shape, tapering toward the chamber, and may be made of flexible fibres, such as nylon netting (as in a soft-eye) and may optionally include a rigid frame to hold it open at its external end (as in a hard-eye).

However, such crab and lobster pots/traps/creels are unsuitable for the capture of scallops. Whereas crabs and lobsters are relatively large and relatively strong crustaceans that would generally enter such chambers by walking, scallops are molluscs that are able to swim by sucking water in through the space between their valves and ejecting it through small holes near the hinge line, though seldom at a height of more than 1 meter off the sea bed and not with significant speed. Accordingly, scallops are not generally strong enough to force themselves through the one-way openings in conventional crab and lobster pots.

According to a first aspect of the present invention, there is provided a gateway for use in a scallop trap, the gateway comprising: a passageway having an external opening at a first end, and an internal opening at a second end opposing the first end; a hinge arranged in use adjacent to an upper periphery of the passageway; and a gate comprising a plurality of independently-movable arms, each arm of the plurality of independently-movable arms depending from the hinge and pivotable about the hinge between a respective closed position in which the respective arm extends across the passageway to a lower periphery of the passageway, and a respective deflected position in which the respective arm is spaced from the lower periphery of the passageway.

By providing independently-movable arms, a scallop need only push the number of arms necessary to pass through the gateway, instead of needing to push additional arms connected to the necessary arm(s).

The passageway may be formed by a wall, for instance a peripheral wall, having a substantially tubular shape. That is, the wall may comprise a lower portion, an upper portion, a first side portion and a second side portion, through which the passageway is formed. For example, the wall may comprise a base, a ceiling, a left wall and a right wall. Alternative or additionally, the wall may be cylindrical or some intermediate or alternative shape.

The passageway may be substantially horizontal. For example, a locus of midpoints of the passageway may be substantially horizontal, even though the lower portion of the wall and/or the base may not itself/themselves be horizontal.

The passageway may comprise a ramp.

In this way, scallops may slide up the ramp from the external opening to the internal opening. The lower portion of the wall and/or the base may comprise a ramp. That is, the lower portion of the wall and/or the base may be sloped at an angle of between 10 degrees and 45 degrees, in use; in particular between 20 degrees and 30 degrees.

Alternatively, the lower portion of the wall and/or the base may be horizontal, in use.

The wall may be formed by conventional means, for example being a mesh formed from wire/string/cord. However, in preferred arrangements, the wall may comprise a moulded plastic.

The passageway may comprise a moulded plastic base.

In this way, a smooth surface is provided to assist scallops in sliding from the external opening to the internal opening. In addition, incorporation of the gateway into a trap is easier than incorporating a conventional soft-eye.

The wall may comprise a mesh, so that water can flow through holes thus formed, so that an effect of currents on the trap is limited. The holes thus formed may have a maximum dimension of at most 5cm, in particular at most 3cm, more particularly at most 2.5cm. In this way, young scallops that are not desired to be caught in the trap can pass freely therethrough.

In use, the external opening may be on the outside of the trap and the internal opening may be on the inside of the trap. The external opening may be larger than the internal opening, for example having a dimension(s) at least 5%, 10% or 25% larger. In this way, scallops may be guided toward the internal opening by the passageway.

The internal and/or external opening may have a maximum lateral dimension of at least 15cm, in particular at least 20cm, more particularly at least 25cm.

In this way, a larger than conventional hole may be provided to accommodate scallops, which travel in more erratic paths than crabs and lobsters.

Nevertheless, the internal and/or external opening may have a maximum lateral dimension of at most 70cm, in particular at most 60cm, more particularly at most 50cm.

Each of the plurality of independently-movable arms may be freely rotatable about the hinge.

In this way, aside from a negligible amount of friction, the only force resisting movement of each independently-movable arm from the closed to the deflected position is gravity. Thus, the only force that needs to be overcome by a scallop is gravity. Not, for instance, some biasing by the hinge.

Accordingly, the only force acting to return each independently-movable arm from the deflected position to the closed position is gravity.

In the context of this application, 'arranged in use' may mean the gateway being incorporated into a trap and the trap being deployed onto a horizontal seabed.

Adjacent to an upper periphery of the passageway may mean in contact with, embedded within, or spaced from by a distance much less than a dimension of the internal and/or external opening, for example at most 10% or 5%. Specifically, the hinge may be spaced at most 5cm, in particular at most 3cm, more particularly at most 2.5cm.

The plurality of independently-movable arms may comprise at least six independently-movable arms, in particular at lest 9, more particularly at least 12.

Each arm may comprise a rigid wire. For example, the wire may comprise steel, and may have a diameter of at least 2mm, in particular at least 2.5mm, more particularly at least 3mm, for example at least 3.5mm. In this way, the arms may be strong enough to prevent crabs and/or lobsters from damaging them. In addition, the mass of the wires may be sufficient to prevent motion away from the closed position by typical water currents.

Depending from the hinge may comprise hanging down from the hinge, in use.

In the closed position each arm may be arranged to block that portion of the passageway across which it extends.

The closed position of each arm may comprise that respective arm resting at an angle of at least 15 degrees from vertical.

In particular at least 20 degrees from vertical, more particularly at least 30 degrees from vertical. In this way, a component of the weight of the respective arm will hold the respective arm in the closed position, for instance against accidental deflection by water currents.

Specifically, the closed position of each arm is such that, when deflected, that arm is at a greater angle to vertical than in the closed position. That is, each arm does not pass through vertical, but is instead held by the hinge such that its respective free end is further inside the trap than the hinged end, in use.

Unlike crabs and lobsters which will climb up the lower periphery of the passage and engage an arm at its free end, a scallop may contact an arm at its hinged end (or any point therebetween). In this way, therefore, a scallop moving forward will be directed down by the sloping arms toward the free ends enabling them to apply more torque to the arms to deflect them.

The deflected position may include an angle at least 30 degrees from vertical, in particular at least 45 degrees from vertical, more particularly at least 60 degrees from vertical.

The gateway may further comprise a guard to prevent deflection of the plurality of independently-movable arms by a crab or lobster from beyond the internal opening.

According to a second aspect of the present invention, there is provided a scallop trap, comprising: a chamber defined by a peripheral barrier configured to prevent the passage of scallops therethrough; the gateway of the first aspect located in the peripheral barrier and arranged to permit the passage of scallops into the chamber.

The peripheral barrier may comprise a mesh, for example formed from wire/string/cord or any other suitable means. The holes formed from the mesh may have a maximum dimension of at most 5cm, in particular at most 3cm, more particularly at most 2.5cm. In this way, young scallops that are not desired to be caught in the trap can pass freely therethrough.

According to a third aspect of the present invention, there is provided a method of retaining scallops within a scallop trap, the method comprising the steps of: providing the scallop trap of the second aspect; in response to a scallop entering the passageway and impinging the gate, deflecting at least one of the plurality of independently-movable arms from its respective closed position to its respective deflected position, to allow passage of the scallop into the chamber; and returning the at least one independently-movable arm to its respective closed position.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.
Figure 1 is a perspective view of a gateway from an exterior side thereof.
Figure 2 is a perspective view of the gateway of figure 1 from an interior side thereof.
Figure 3 is a partially exploded view of the gateway of figure 1 and figure 2.
Figure 4 is a detailed view of one of the plurality of independently-movable arms illustrated in figure 1 to figure 3.
Figure 5 is a perspective view of an alternative gateway from an interior side thereof.

The present invention will be described with respect to certain drawings but the invention is not limited thereto but only by the claims. The drawings described are only schematic and are non-limiting. Each drawing may not include all of the features of the invention and therefore should not necessarily be considered to be an embodiment of the invention. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that operation is capable in other sequences than described or illustrated herein. Likewise, method steps described or claimed in a particular sequence may be understood to operate in a different sequence.

Moreover, the terms top, bottom, over, under and the like in the description and the claims are used for descriptive purposes and not necessarily for describing relative positions. It is to be understood that the terms so used are interchangeable under appropriate circumstances and that operation is capable in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "connected", used in the description, should not be interpreted as being restricted to direct connections only. "Connected" may mean that two or more elements are either in direct physical or electrical contact, or that two or more elements are not in direct contact with each other but yet still co-operate or interact with each other.

Reference throughout this specification to "an embodiment" or "an aspect" means that a particular feature, structure or characteristic described in connection with the embodiment or aspect is included in at least one embodiment or aspect of the present invention. Thus, appearances of the phrases "in one embodiment", "in an embodiment", or "in an aspect" in various places throughout this specification are not necessarily all referring to the same embodiment or aspect, but may refer to different embodiments or aspects. Furthermore, the particular features, structures or characteristics of any one embodiment or aspect of the invention may be combined in any suitable manner with any other particular feature, structure or characteristic of another embodiment or aspect of the invention, as would be apparent to one of ordinary skill in the art from this disclosure, in one or more embodiments or aspects.

Similarly, it should be appreciated that in the description various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Moreover, the description of any individual drawing or aspect should not necessarily be considered to be an embodiment of the invention. Rather, as the following claims reflect, inventive aspects lie in fewer than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some features included in other embodiments, combinations of features of different embodiments are meant to be within the scope of the invention, and form yet further embodiments, as will be understood by those skilled in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

In the discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The use of the term "at least one" may mean only one in certain circumstances. The use of the term "any" may mean "all" and/or "each" in certain circumstances.

The principles of the invention will now be described by a detailed description of at least one drawing relating to exemplary features. It is clear that other arrangements can be configured according to the knowledge of persons skilled in the art without departing from the underlying concept or technical teaching, the invention being limited only by the terms of the appended claims.

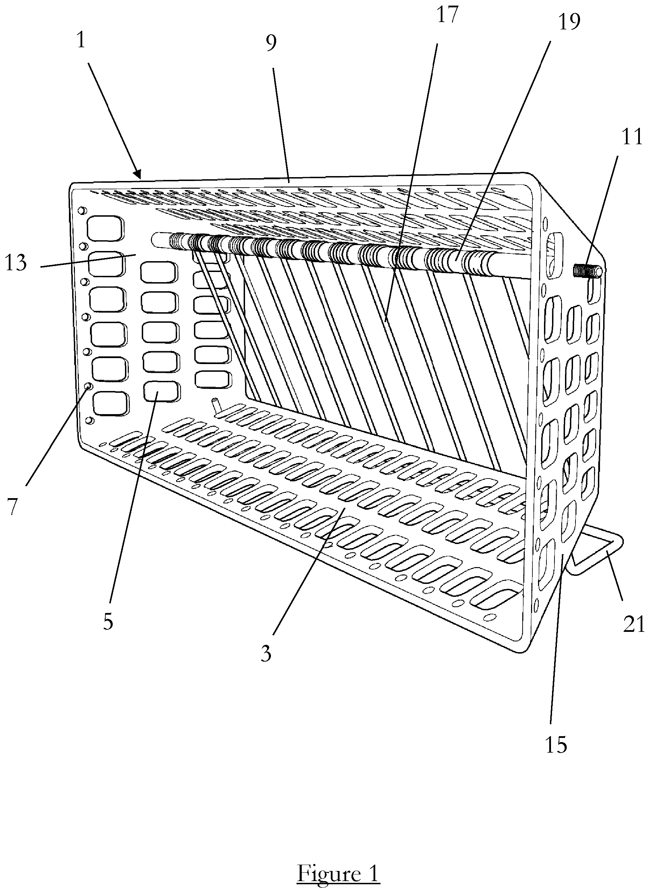

Figure 1 is a perspective view of a gateway comprising a peripheral wall 1 formed of moulded plastic and defining a passageway therethrough. The passageway has a proximal opening that is wider than the distal opening, the proximal opening being intended as an exterior opening, and the distal opening being intended as an interior opening, of a scallop trap. Accordingly, the passageway narrows from exterior to interior, in part due to the lower portion 3 of the peripheral wall 1 forming an upwardly-sloping ramp.

The peripheral wall is in the form of a mesh, in that it comprises an array of holes therethrough to reduce weight, materials, and resistance to water currents. An addition row of smaller holes 7 are arranged around the perimeter of the exterior opening, and intended for easy attachment of the gateway to a trap, by cord, wire, etc.

Adjacent to an upper portion 9 of the peripheral wall 1 is an axle that extends through both side walls 13 and 15. The end of the axle is shown threaded, such that a retaining nut (not shown) may be used to hold it in place.

Upon the axle are mounted twelve freely-rotatable (and independently-movable) arms 17, spaced apart from one another by spacers 19. Each arm 17 extends from the axle 11 down through the internal opening to rest on the lower portion 3 at an angle of approximately 25 degrees from vertical.

A guard rail 21 is shown extending from (and through) the lower portion 3, and will be discussed in more detail below.

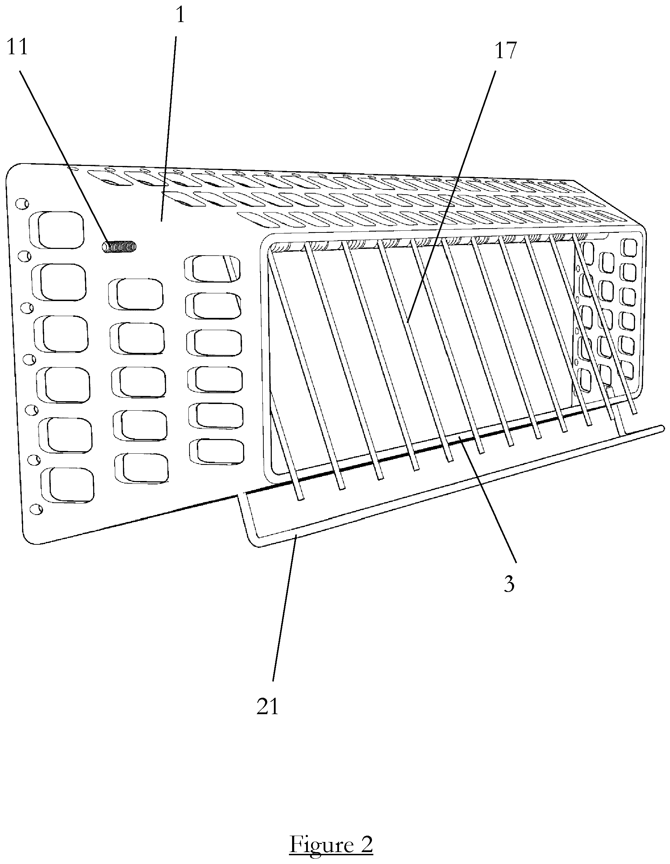

Figure 2 is a perspective view of the gateway of figure 1 from its interior opening. Each arm 17 can be seen resting against the lower portion 3 of the peripheral wall 1. The guard rail 21 can be seen to extend down from the lower portion 3 beyond the lowermost extent of the arms 17, and extending rearwardly beyond the rearmost extent of the arms 17 (when at rest against the lower portion 3 of the peripheral wall 1).

However, when pushed (for example by a scallop that has entered the passageway from the exterior opening), one of the arms 17 may pivot on the axle away from the lower portion 3 of the peripheral wall 1, in particular beyond the extent of the guard rail 21, such that the scallop may pass through the interior opening and into a container in which the gateway is incorporated.

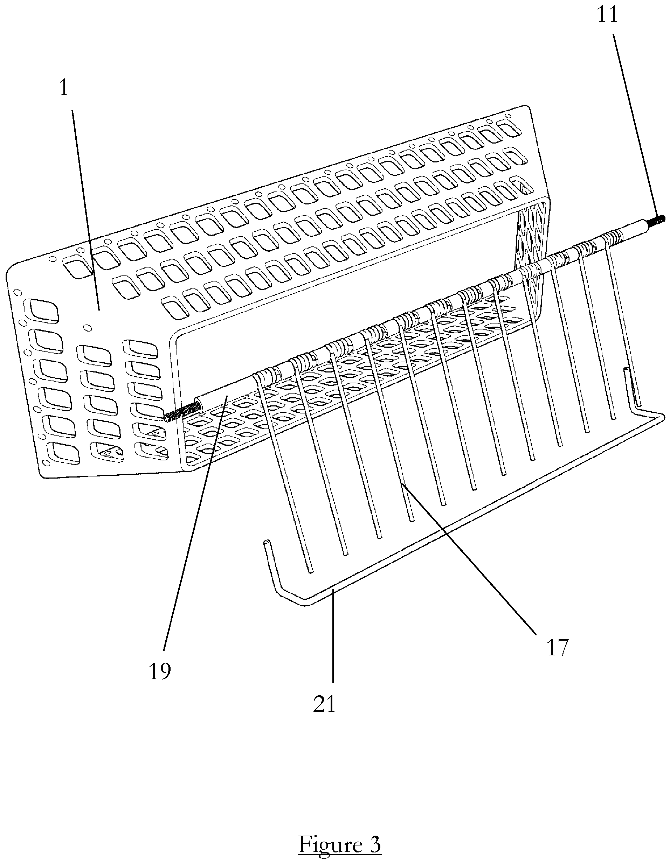

Figure 3 is a partially exploded view of the gateway of figure 1 and figure 2, again from the interior side. The axle 11 and guard rail 21 are shown separated from the peripheral wall 1; however, the arms 17 and spacers 19 are still shown mounted on the axle 11.

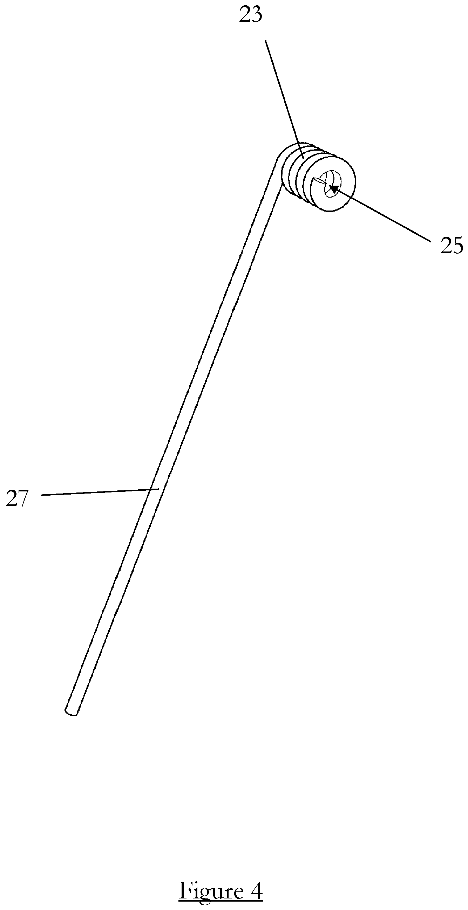

Figure 4 is a detailed view of one of the plurality of independently-movable arms 17 illustrated in figure 1 to figure 3. The arm 17 is formed from a single piece of straight wire that at one end has been coiled into a helical shape 23, forming a substantially cylindrical internal passage 25 configured to receive the axle 11 therethrough. The opposing end of the arm 27 is straight.

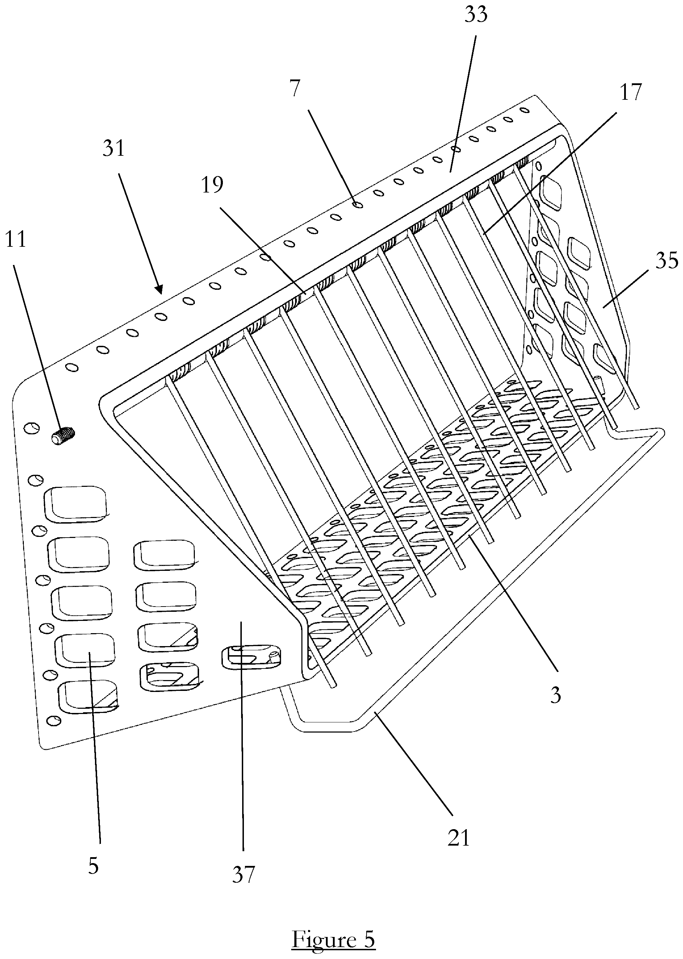

Figure 5 is a perspective view of an alternative gateway from an interior side thereof, in which similar elements are shown with similar reference signs. This alternative gateway differs from that shown in figure 1 to figure 3 in that its peripheral wall 31, and specifically its upper portion 33 and side walls 35 and 37, differ in shape.

In particular, the interior opening is canted obliquely forward such that its upper boundary is adjacent to a corresponding upper boundary of the exterior opening, with the axle 11 disposed in the side walls 35 and 37 (adjacent the narrow upper portion 33) in the narrow region between the two openings.

## Claims

1. A gateway for use in a scallop trap, the gateway comprising:
a passageway having an external opening at a first end, and an internal opening at a second end opposing the first end;
a hinge arranged in use adjacent to an upper periphery of the passageway; and
a gate comprising a plurality of independently-movable arms, each arm of the plurality of independently-movable arms depending from the hinge and pivotable about the hinge between a respective closed position in which the respective arm extends across the passageway to a lower periphery of the passageway, and a respective deflected position in which the respective arm is spaced from the lower periphery of the passageway.

2. The gateway of claim 1, wherein the passageway comprises a ramp.

3. The gateway of claim 1 or claim 2, wherein the passageway comprises a moulded plastic base.

4. The gateway of any preceding claim, wherein each of the plurality of independently-movable arms is freely rotatable about the hinge.

5. The gateway of any preceding claim, wherein the closed position of each arm comprises that respective arm resting at an angle of at least 15 degrees from vertical.

6. The gateway of any preceding claim, further comprising a guard to prevent deflection of the plurality of independently-movable arms by a crab or lobster from beyond the internal opening.

7. A scallop trap, comprising:
a chamber defined by a peripheral barrier configured to prevent the passage of scallops therethrough;
the gateway of any preceding claim located in the peripheral barrier and arranged to permit the passage of scallops into the chamber.

8. A method of retaining scallops within a scallop trap, the method comprising the steps of:
providing the scallop trap of claim 7;
in response to a scallop entering the passageway and impinging the gate, deflecting at least one of the plurality of independently-movable arms from its respective closed position to its respective deflected position, to allow passage of the scallop into the chamber; and
returning the at least one independently-movable arm to its respective closed position.
